# EUROPEAN PATENT APPLICATION

(11) **EP 4 254 598 A2**
(43) Date of publication of application: **04.10.2023**
(21) Application number: 23164618.3
(22) Date of filing: 28.03.2023
(51) Int. Cl.: H01M 10/44, H01M 10/48

(54) **ELECTROCHEMICAL DEVICE, CHARGING AND DISCHARGING METHOD, AND ELECTRONIC DEVICE**

(30) Priority: 31.03.2022 CN 202210330340
(71) Applicant: Ningde Amperex Technology Limited, Ningde City, Fujian Province 352100 (CN)
(72) Inventor: LIU, Wei, 352100 Ningde City, Fujian Province (CN)
(74) Representative: Icosa

(57) **Abstract**

A negative active material of the electrochemical device includes a first active material and a second active material. A gram capacity of the first active material is less than a gram capacity of the second active material. An upper limit of a discharge operating voltage of the first active material is higher than an upper limit of a discharge operating voltage of the second active material. At a first ambient temperature T₁ and a second ambient temperature T₂, in a single charge-and-discharge process of a first cycle interval, the electrochemical device possesses a charge capacity Q₁₁ and Q₂₁ respectively, a discharge cut-off voltage V₁₁ and V₂₁ respectively, and a discharge cut-off current In and I₂₁, respectively; in a single charge-and-discharge process of a second cycle interval, the electrochemical device possesses a charge capacity Q₁₂ and Q₂₂ respectively, a discharge cut-off voltage V₁₂ and V₂₂ respectively, and a discharge cut-off current I₁₂ and I₂₂ respectively. Q₂₁ differs from Q₁₁ by at most 20%. The electrochemical device satisfies at least one of conditions a) to c): a) Q₁₂ ≤ Q₁₁; b) V₁₂ > V₁₁; and c) I₁₂ > I₁₁. The electrochemical device satisfies at least one of conditions d) to f): d) Q₂₂ ≤ Q₂₁; e) V₂₂ > V₂₁; and f) I₂₂> I₂₁.

## Description

### TECHNICAL FIELD

Some embodiments of this application relate to the technical field of batteries, and in particular, to an electrochemical device, a charging and discharging method, and an electronic device.

### BACKGROUND

Cycle performance of an electrochemical device directly affects a service life and quality of the electrochemical device. Higher cycle performance leads to a longer life of the electrochemical device, and not only reduces the user's use cost, but also reduces resource consumption.

The cycle performance of the electrochemical device includes normal-temperature cycle performance and high-temperature cycle performance. For a silicon-based battery and other electrochemical devices with a low temperature coefficient, the high-temperature cycle performance of the device differs sharply from the normal-temperature cycle performance of the device. Using a silicon-based battery as an example, due to characteristics of the silicon-based battery, a voltage plateau of the battery is relatively low, and the temperature coefficient is relatively low, and therefore, a charging capacity of the battery charged at a high temperature is higher than the charging capacity of the battery charged at a normal temperature. Consequently, a positive electrode of the silicon-based battery is over-delithiated, thereby drastically deteriorating the high-temperature cycle performance of the silicon-based battery. In addition, during the long-term use of the silicon-based battery, the silicon material tends to expand, thereby affecting the cycle performance of the battery in the full lifespan of the silicon-based battery.

### SUMMARY

In view of this, some embodiments of this application provide an electrochemical device, a charging and discharging method, and an electronic device to solve at least a part of the foregoing problems.

According to a first aspect of some embodiments of this application, an electrochemical device is provided. A negative active material of the electrochemical device includes a first active material and a second active material. A theoretical gram capacity of the first active material is less than a theoretical gram capacity of the second active material. An upper limit of a discharge operating voltage of the first active material is higher than an upper limit of a discharge operating voltage of the second active material.

At a first ambient temperature T₁, in a single charge-and-discharge process of a first cycle interval, the electrochemical device possesses a charge capacity Q₁₁ and a discharge cut-off voltage V₁₁ or a discharge cut-off current I₁₁.

In a single charge-and-discharge process of a second cycle interval, the electrochemical device possesses a charge capacity Q₁₂ and a discharge cut-off voltage V₁₂ or a discharge cut-off current I₁₂ and satisfies at least one of conditions a) to c):
a) Q₁₂ ≤ Q₁₁;
b) V₁₂ > V₁₁; and
c) I₁₂ > I₁₁.

At a second ambient temperature T₂, where T₂ is greater than T₁, in the single charge-and-discharge process of the first cycle interval, the electrochemical device possesses a charge capacity Q₂₁ and satisfies a condition that Q₂₁ differs from Q₁₁ by at most 20%. The electrochemical device possesses a discharge cut-off voltage V₂₁ or a discharge cut-off current I₂₁ in the first cycle interval.

In the single charge-and-discharge process of the second cycle interval, the electrochemical device possesses a charge capacity Q₂₂ and a discharge cut-off voltage V₂₂ or a discharge cut-off current I₂₂, and satisfies at least one of conditions d) to f):
d) Q₂₂ ≤ Q₂₁;
e) V₂₂ > V₂₁; and
f) I₂₂ > I₂₁.

In a possible embodiment, with reference to the first aspect, a temperature coefficient of the second active material is lower than 0.98.

In another possible embodiment, with reference to the first aspect, the second active material includes a transition metal oxide.

In still another possible embodiment, with reference to the first aspect, the single charge-and-discharge process of the electrochemical device includes: charging the electrochemical device at a constant charge current until a first voltage, and then charging the electrochemical device at a constant voltage of the first voltage until a first current; charging the electrochemical device at a constant current of the first current until a second voltage, and then charging the electrochemical device at a constant voltage of the second voltage until a second current; and charging the electrochemical device at a constant current of the second current until a third voltage, and then charging the electrochemical device at a constant voltage of the third voltage until a target charge cut-off current.

In still another possible embodiment, with reference to the first aspect, T₁ < 35 °C, and 35 °C ≤ T₂ ≤ 60 °C.

In still another possible embodiment, with reference to the first aspect, Q₂₂ differs from Q₁₂ by at most 20%.

In still another possible embodiment, with reference to the first aspect, the electrochemical device is connected to a processor. The processor is configured to: obtain a current temperature of the electrochemical device; determine a target charge cut-off current of the electrochemical device based on the current temperature and a preset first mapping relationship between a temperature and a charge cut-off current, where the first mapping relationship includes N temperatures and corresponding N charge cut-off currents, the N charge cut-off currents increase with the rise of the N temperatures, and N is an integer greater than or equal to 2; and control charging of the electrochemical device until the target charge cut-off current.

In still another possible embodiment, with reference to the first aspect, the processor is specifically configured to determine that a temperature closest to the current temperature in the first mapping relationship is a target temperature, and determine that a charge cut-off current corresponding to the target temperature is the target charge cut-off current.

In still another possible embodiment, with reference to the first aspect, the processor is further configured to: obtain a current number of charge-and-discharge cycles of the electrochemical device; determine a target cycle interval of the electrochemical device based on the current number of charge-and-discharge cycles; determine a target discharge cut-off voltage or a target discharge cut-off current based on the target cycle interval and a preset second mapping relationship between a cycle interval and a discharge cut-off voltage or discharge cut-off current, where the second mapping relationship includes M sequential cycle intervals and corresponding M discharge cut-off voltages or discharge cut-off currents, a cycle interval with a larger number of charge-and-discharge cycles corresponds to a higher discharge cut-off voltage or discharge cut-off current, and M is an integer greater than or equal to 2; and control discharging of the electrochemical device until the target discharge cut-off voltage or target discharge cut-off current.

In still another possible embodiment, with reference to the first aspect, a difference between discharge cut-off voltages corresponding to two adjacent cycle intervals is greater than a first voltage range, and the first voltage range is between 0.1 V and 0.2 V.

According to a second aspect of some embodiments of this application, a charging and discharging method of an electrochemical device is provided. A negative active material of the electrochemical device includes a first active material and a second active material. A theoretical gram capacity of the first active material is less than a theoretical gram capacity of the second active material. An upper limit of a discharge operating voltage of the first active material is higher than an upper limit of a discharge operating voltage of the second active material. The method includes:
controlling, at a first ambient temperature T₁, in a single charge-and-discharge process of a first cycle interval, the electrochemical device to possess a charge capacity Q₁₁ and a discharge cut-off voltage V₁₁ or a discharge cut-off current I₁₁;
controlling, in a single charge-and-discharge process of a second cycle interval, the electrochemical device to possess a charge capacity Q₁₂ and a discharge cut-off voltage V₁₂ or a discharge cut-off current I₁₂ and to satisfy at least one of conditions a) to c):
   a) Q₁₂ ≤ Q₁₁;
   b) V₁₂ > V₁₁; and
   c) I₁₂ > I₁₁;
controlling, at a second ambient temperature T₂, where T₂ is greater than T₁, in the single charge-and-discharge process of the first cycle interval, the electrochemical device to possess a charge capacity Q₂₁ and to satisfy a condition that Q₂₁ differs from Q₁₁ by at most 20%, where the electrochemical device possesses a discharge cut-off voltage V₂₁ or a discharge cut-off current I₂₁ in the first cycle interval; and
controlling, in the single charge-and-discharge process of the second cycle interval, the electrochemical device to possess a charge capacity Q₂₂ and a discharge cut-off voltage V₂₂ or a discharge cut-off current I₂₂, and to satisfy at least one of conditions d) to f):
   d) Q₂₂ ≤ Q₂₁;
   e) V₂₂ > V₂₁; and
   f) I₂₂ > I₂₁.

According to a third aspect of an embodiment of this application, an electronic device is provided. The electronic device includes the electrochemical device according to any embodiment of the first aspect.

Based on the foregoing technical solution, the negative active material of the electrochemical device includes a first active material and a second active material. The theoretical gram capacity of the first active material is less than the theoretical gram capacity of the second active material. The upper limit of the discharge operating voltage of the first active material is higher than the upper limit of the discharge operating voltage of the second active material. At the first ambient temperature T₁, in a single charge-and-discharge process of a first cycle interval, the electrochemical device possesses a charge capacity Q₁₁. At the second ambient temperature T₂ that is greater than T₁, in a single charge-and-discharge process of the first cycle interval, the electrochemical device possesses a charge capacity Q₂₁. Q₂₁ differs from Q₁₁ by at most 20%. In other words, the charge capacity of the electrochemical device at a relatively high second ambient temperature is basically the same as the charge capacity at the first ambient temperature, thereby avoiding over-delithiation of the negative electrode of the electrochemical device in a high-temperature environment and improving the high-temperature cycle performance of the electrochemical device. In addition, at the first ambient temperature T₁, in a single charge-and-discharge process of a first cycle interval, the electrochemical device possesses a charge capacity Q₁₁ and a discharge cut-off voltage V₁₁ or a discharge cut-off current I₁₁; in a single charge-and-discharge process of a second cycle interval, the electrochemical device possesses a charge capacity Q₁₂ and a discharge cut-off voltage V₁₂ or a discharge cut-off current I₁₂. The electrochemical device satisfies at least one of conditions a) to c): a) Q₁₂ ≤ Q₁₁; b) V₁₂ > V₁₁; and c) I₁₂ > I₁₁. At the second ambient temperature T₂ that is greater than T₁, in a single charge-and-discharge process of a first cycle interval, the electrochemical device possesses a charge capacity Q₂₁ and a discharge cut-off voltage V₂₁ or a discharge cut-off current I₂₁; in a single charge-and-discharge process of a second cycle interval, the electrochemical device possesses a charge capacity Q₂₂ and a discharge cut-off voltage V₂₂ or a discharge cut-off current I₂₂. The electrochemical device satisfies at least one of conditions d) to f): d) Q₂₂ ≤ Q₂₁; e) V₂₂ > V₂₁; and f) I₂₂ > I₂₁. In other words, different discharge cut-off voltages or discharge cut-off currents are used in different cycle intervals, and the discharge cut-off voltage of the electrochemical device is gradually increased to implement optimal use of the electrochemical device in a full lifespan, and in turn, improve the cycle performance of the electrochemical device in the full lifespan.

### BRIEF DESCRIPTION OF DRAWINGS

To describe the technical solutions in some embodiments of this application or the prior art more clearly, the following outlines the drawings to be used in the description of some embodiments of this application or the prior art. Evidently, the drawings outlined below merely illustrate some embodiments of this application, and a person of ordinary skill in the art may derive other drawings from such drawings.
FIG. 1 is a schematic diagram of cycle performance of an electrochemical device cycled at a normal temperature of 25 °C and a high temperature of 45 °C in the related art;
FIG. 2 is a schematic diagram of a cycle curve of an electrochemical device discharged until different discharge cut-off voltages according to an embodiment of this application;
FIG. 3 is a schematic diagram of cycle performance of an electrochemical device cycled at a high temperature of 45 °C before and after capacity limiting according to an embodiment of this application;
FIG. 4 is a schematic flowchart of a charging method of an electrochemical device according to an embodiment of this application; and
FIG. 5 is a schematic structural diagram of an electronic device according to an embodiment of this application.

### DETAILED DESCRIPTION OF EMBODIMENTS

To enable a person skilled in the art to understand the technical solutions of some embodiments of this application more clearly, the following describes the technical solutions hereof expressly in detail with reference to the drawings appended hereto. Evidently, the described embodiments are merely a part of but not all of the embodiments of this application. All other embodiments derived by a person of ordinary skill in the art based on the embodiments of this application still fall within the protection scope of this application.

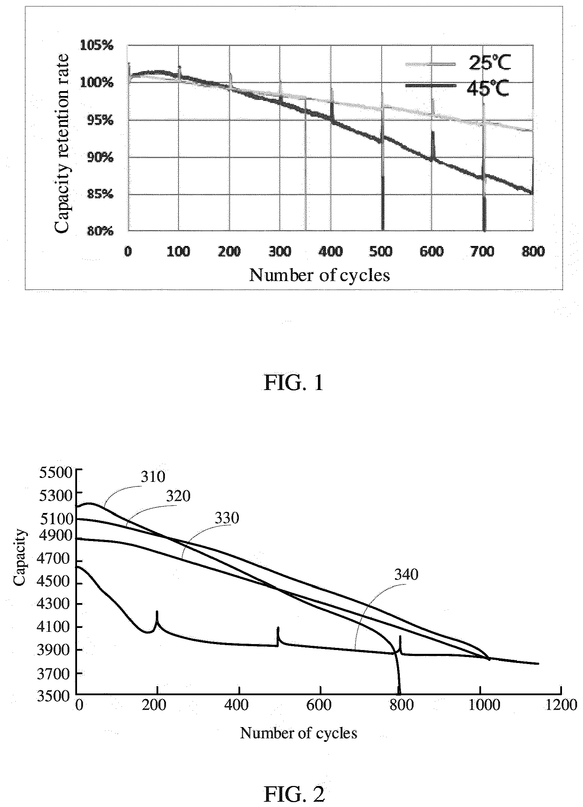

Polarization occurs in an electrochemical device during charging. Factors that affect the polarization of the electrochemical device include not only a current, but also an ambient temperature. The higher the ambient temperature, the weaker the polarization of the electrochemical device. The weakened polarization increases a potential of a positive electrode of the electrochemical device during charging. A charge capacity of the electrochemical device at a high ambient temperature is higher than that at a normal temperature, thereby causing over-delithiation of the positive electrode of the electrochemical device and deteriorating the high-temperature performance of the electrochemical device. This is especially evident for a silicon-based electrochemical device and similar electrochemical devices with a relatively low temperature coefficient. Using a silicon-based battery as an example, as shown in FIG. 1, when the Si content is the same between the electrochemical devices, as can be seen from comparison of cycle performance between the electrochemical devices cycled at a normal temperature of 25 °C and a high temperature of 45 °C separately, the cycle life of the electrochemical device cycled at a normal temperature of 25 °C is significantly longer than the cycle life of the electrochemical device cycled at a high temperature of 45 °C. When the number of cycles reaches 800, the capacity retention rate differs by approximately 8% between the two electrochemical devices. In addition, Table 1 shows comparison of a cycle capacity of the electrochemical devices that contain the silicon material and that are cycled at a normal temperature of 25 °C and a high temperature of 45 °C separately. As shown in Table 1, with the same silicon material and the same chemical system, the cycle capacity of the electrochemical device cycled at a normal temperature of 45 °C is greater than the cycle capacity of the electrochemical device cycled at a high temperature of 25 °C. Consequently, the electrochemical device cycled at a high temperature of 45 °C is over-delithiated and the cycle performance is deteriorated, as shown in FIG. 1. A main reason for the foregoing problems is that the voltage plateau of silicon (sometimes referred to as a discharge operating voltage hereinafter) is relatively low, the temperature coefficient is relatively low, and the charge capacity and the discharge capacity of the electrochemical device cycled at a high temperature of 45 °C are higher, resulting in over-delithiation of the positive electrode of the electrochemical device.

**Table 1**

| Number of cycles | Charge capacity under 25 °C | Discharge capacity under 25 °C | Charge capacity under 45 °C | Discharge capacity under 45 °C |
|---|---|---|---|---|
| 1 | 0.0 | 2441.6 | 4601.7 | 4592.4 |
| 2 | 4548.7 | 4525.7 | 4639.8 | 4629.4 |
| 3 | 4549.7 | 4435.1 | 4639.4 | 4628.1 |
| 4 | 4472.0 | 4464.0 | 4637.1 | 4627.0 |
| 5 | 4477.4 | 4467.1 | 4635.1 | 4626.2 |
| 6 | 4479.1 | 4470.2 | 4634.5 | 4625.1 |
| 7 | 4482.3 | 4472.0 | 4632.8 | 4623.8 |
| 8 | 4484.0 | 4474.7 | 4630.1 | 4622.4 |
| 9 | 4486.4 | 4474.5 | 4629.8 | 4621.6 |
| 10 | 4485.4 | 4475.4 | 4628.0 | 4620.0 |

In addition, the cycle performance of silicon is relatively low. During long-term use, the silicon-based material expands considerably in volume. The large volume change is prone to cause an active material to fall off from a current collector, thereby reducing the area of electrical contact with the current collector, deteriorating the cycle performance of the electrode, and impairing the cycle performance of the silicon-based battery in the full lifespan.

In view of the fact above, some embodiments of this application provide an electrochemical device, a charging and discharging method of the electrochemical device, and an electronic device to solve at least a part of the foregoing problems. The specific implementation of some embodiments of this application is described in further detail below with reference to drawings.

Referring to FIG. 1 to FIG. 3, an embodiment of this application provides an electrochemical device. A negative active material of the electrochemical device includes a first active material and a second active material. A theoretical gram capacity of the first active material is less than a theoretical gram capacity of the second active material. An upper limit of a discharge operating voltage of the first active material is higher than an upper limit of a discharge operating voltage of the second active material. In some embodiments, the first active material includes graphite, and the second active material includes silicon or a silicon-based material. The upper limit of the operating voltage of graphite is 4.3 V or above. The upper limit of the operating voltage of silicon is generally 3.5 V.

At a first ambient temperature T₁,in a single charge-and-discharge process of a first cycle interval, the electrochemical device possesses a charge capacity Q₁₁ and a discharge cut-off voltage V₁₁ or a discharge cut-off current I₁₁.

In a single charge-and-discharge process of a second cycle interval, the electrochemical device possesses a charge capacity Q₁₂ and a discharge cut-off voltage V₁₂ or a discharge cut-off current I₁₂ and satisfies at least one of conditions a) to c):
a) Q₁₂ ≤ Q₁₁;
b) V₁₂ > V₁₁; and
c) I₁₂ > I₁₁;

At a second ambient temperature T₂, where T₂ is greater than T₁, in the single charge-and-discharge process of the first cycle interval, the electrochemical device possesses a charge capacity Q₂₁ and satisfies a condition that Q₂₁ differs from Q₁₁ by at most 20%. The electrochemical device possesses a discharge cut-off voltage V₂₁ or a discharge cut-off current I₂₁ in the first cycle interval.

In the single charge-and-discharge process of the second cycle interval, the electrochemical device possesses a charge capacity Q₂₂ and a discharge cut-off voltage V₂₂ or a discharge cut-off current I₂₂, and satisfies at least one of conditions d) to f):
d) Q₂₂ ≤ Q₂₁;
e) V₂₂ > V₂₁; and
f) I₂₂ > I₂₁.

In an embodiment of this application, the upper limit of the discharge operating voltage of the first active material is higher than the upper limit of the discharge operating voltage of the second active material. Therefore, during discharging of the electrochemical device, the first active material discharges electricity before the second active material. In an embodiment of this application, the first active material may be graphite, and the second active material may be simple-substance silicon, silicon oxide, a silicon-carbon composite, a silicon alloy, or the like, or may be another negative material with a discharge operating voltage (also referred to as a voltage plateau) lower than the discharge operating voltage of the first active material and with a temperature coefficient lower than 0.98. For example, in an embodiment, the second active material may include transition metal oxide. For ease of description below, an embodiment of this application is described in detail by using an example in which the second active material is silicon (Si). Understandably, this embodiment of this application is also applicable to an electrochemical device containing other second active materials mentioned above.

The statement that at a first ambient temperature T₁, in a single charge-and-discharge process of a first cycle interval, the electrochemical device possesses a charge capacity Q₁₁, may be understood as: in a single charge-and-discharge process of a first cycle interval, the electrochemical device possesses a full-charge capacity Q₁₁ under the first ambient temperature T₁. The full-charge capacity is a capacity of the electrochemical device achieved when the electrochemical device reaches an charge voltage limit and a charge cut-off current during charging.

Similarly, the statement that at a second ambient temperature T₂, where T₂ is greater than T₁, in a single charge-and-discharge process of a first cycle interval, the electrochemical device possesses a charge capacity Q₂₁, may be understood as: in a single charge-and-discharge process of a first cycle interval, the electrochemical device possesses a full-charge capacity Q₂₁ under the second ambient temperature T₂.

Q₂₁ differs from Q₁₁ by at most 20%, that is, in the first cycle interval, the full-charge capacity of the electrochemical device charged at a relatively high second ambient temperature T₂ is approximately the same as the full-charge capacity of the electrochemical device charged at the first ambient temperature T₁, thereby effectively alleviating over-delithiation of the positive electrode of the electrochemical device in a relatively high-temperature environment in the first cycle interval, alleviating the deterioration caused by a positive electrode voltage of the electrochemical device to the high-voltage cycle, and improving the high-temperature cycle performance of the electrochemical device.

In addition, in an embodiment of this application, similar to the situation concerning the first cycle interval, Q₂₂ differs from Q₁₂ by at most 20%. That is, in the second cycle interval, the full-charge capacity of the electrochemical device charged at a relatively high second ambient temperature T₂ is approximately the same as the full-charge capacity of the electrochemical device charged at the first ambient temperature T₁, thereby further effectively alleviating the over-delithiation of the positive electrode of the electrochemical device in the relatively high temperature environment in the second cycle interval.

In an embodiment of this application, T₁ < 35 °C, and 35 °C ≤ T₂ ≤ 60 °C. Therefore, a charging process of the electrochemical device charged under an ambient temperature less than 35 °C may be understood as a normal-temperature charging process, and a charging process of the electrochemical device charged under an ambient temperature greater than or equal to 35 °C and less than or equal to 60 °C may be understood as a high-temperature charging process.

That Q₂₁ differs from Q₁₁ by at most 20% and/or Q₂₂ differs from Q₁₂ by at most 20% may be understood as: the charge capacity of the electrochemical device in a normal-temperature charging process remains approximately the same as the charge capacity of the electrochemical device in a high-temperature charging process. In other words, in this embodiment of this application, the charge capacity of the electrochemical device charged at a high temperature is consistent with the charge capacity of the electrochemical device charged at a normal temperature, thereby effectively alleviating the over-delithiation of the positive electrode of the electrochemical device in a high-temperature environment, alleviating the deterioration caused by the positive electrode voltage of the electrochemical device to high-voltage cycling, and improving high-temperature cycle performance of the electrochemical device.

In this embodiment of this application, the charging of the electrochemical device may be controlled to reach a target charge cut-off voltage or target charge cut-off current corresponding to each ambient temperature. In this way, the charge capacities of the electrochemical device charged at different ambient temperatures are approximately consistent, and specifically, the charge capacity of the electrochemical device charged at a normal temperature is approximately consistent. The target charge cut-off voltage may be greater than or equal to the charge voltage limit of the electrochemical device, or may be less than the charge voltage limit of the electrochemical device. The adjustment of the target charge cut-off voltage involves execution by the entire electronic device that contains the electrochemical device. For example, the power of a charger needs to be adjusted to implement the adjustment of the target charge cut-off voltage, which is relatively complicated. In contrast, the adjustment of the target charge cut-off current can be implemented by just monitoring the temperature of the electrochemical device, and can be implemented by using software in combination with hardware, which is relatively simple.

For example, in an embodiment of this application, the electrochemical device is connected to a processor. The processor is configured to: obtain a current temperature of the electrochemical device; determine a target charge cut-off current of the electrochemical device based on the current temperature and a preset first mapping relationship between a temperature and a charge cut-off current, where the first mapping relationship includes N temperatures and corresponding N charge cut-off currents, the N charge cut-off currents increase with the rise of the N temperatures, and N is an integer greater than or equal to 2; and control charging of the electrochemical device until the target charge cut-off current.

Specifically, the determining, by the processor, a target charge cut-off current of the electrochemical device based on the current temperature and a preset first mapping relationship between a temperature and a charge cut-off current includes: determining that a temperature closest to the current temperature in the first mapping relationship is a target temperature, and determining that a charge cut-off current corresponding to the target temperature is the target charge cut-off current.

In the above manner, the electrochemical device may be charged until the charge cut-off current corresponding to the first ambient temperature T₁ at the first ambient temperature T_{1,} so that the charge capacity of the electrochemical device in a single charge-and-discharge process of the first cycle interval is Q₁₁; and the electrochemical device may be charged until the charge cut-off current corresponding to the second ambient temperature T₂ at the second ambient temperature T₂, so that the charge capacity of the electrochemical device in a single charge-and-discharge process of the first cycle interval is Q₂₁. In this simple way, the charge capacities of the electrochemical device at various ambient temperatures are made to be approximately consistent, thereby effectively alleviating the over-delithiation of the positive electrode of the electrochemical device in a high-temperature environment, alleviating the deterioration caused by the positive electrode voltage of the electrochemical device to the high-voltage cycling, and improving the high-temperature cycle performance of the electrochemical device.

In an embodiment of this application, the single charge-and-discharge process of the electrochemical device includes: charging the electrochemical device at a constant charge current until a first voltage, and then charging the electrochemical device at a constant voltage of the first voltage until a first current; charging the electrochemical device at a constant current of the first current until a second voltage, and then charging the electrochemical device at a constant voltage of the second voltage until a second current; and charging the electrochemical device at a constant current of the second current until a third voltage, and then charging the electrochemical device at a constant voltage of the third voltage until a target charge cut-off current.

It is hereby noted that one cycle interval includes a plurality of charge-and-discharge cycles. In this application, assigning a numerical value to a parameter (for example, charge capacity, charge voltage, charge current, charge cut-off voltage, charge cut-off current, discharge cut-off voltage, discharge cut-off current) in a single charge-and-discharge cycle of a cycle interval does not intend to impose a limitation that the value of this parameter is equal in all charge-and-discharge cycles of this cycle interval or is this numerical value.

For example, there may be a plurality of charge-and-discharge cycles in the first cycle interval at the first temperature. The charge capacities of a plurality of charge-and-discharge cycles may be the same or different. As an example, the first cycle interval includes the i^{th} charge-and-discharge cycle and the (i+1)^{th} charge-and-discharge cycle. The charge capacity of the i^{th} charge-and-discharge cycle is denoted as Q₁ᵢ, and the charge capacity of the (i+1)^{th} charge-and-discharge cycle is denoted as Q₁₍ᵢ₊₁₎. Q₁ᵢ may be the same as Q₁₍ᵢ₊₁₎. Alternatively, the value of Q₁ᵢ may differ from the value of Qi(i+i) by a maximum degree of difference of 20%. The degree of difference between two values is equal to a result obtained by dividing a difference by a smaller value of the two values and then multiplying the quotient by 100%, where the difference is obtained by subtracting the smaller value from the larger value thereof. Similarly, in the second cycle interval under the first temperature (or the first cycle interval under the second temperature, or the second cycle interval under the second temperature), a plurality of charge-and-discharge cycles may correspond to the same charge capacity or different charge capacities.

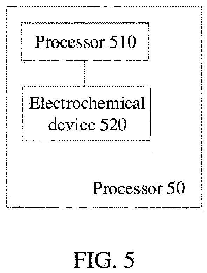

In this embodiment, based on a single charge-and-discharge process of the electrochemical device, the charging of the electrochemical device may be controlled to reach a target charge cut-off current corresponding to each ambient temperature. In this way, the charge capacities of the electrochemical device charged at different ambient temperatures are approximately consistent. The implementation is relatively simple, and can effectively improve the high-temperature cycle performance of the electrochemical device. As shown in FIG. 5, in a specific example, the foregoing charging method is applied, and the target charge cut-off current is adjusted to limit the capacity under a high temperature. After completion of 700 cycles, the capacity retention rate increases by approximately 5%.

In addition, in this embodiment of this application, at the first ambient temperature T₁, in a single charge-and-discharge process of a first cycle interval, the electrochemical device possesses a charge capacity Q₁₁ and a discharge cut-off voltage V₁₁ or a discharge cut-off current I₁₁; in a single charge-and-discharge process of a second cycle interval, the electrochemical device possesses a charge capacity Q₁₂ and a discharge cut-off voltage V₁₂ or a discharge cut-off current I₁₂. The electrochemical device satisfies at least one of conditions a) to c): a) Q₁₂ ≤ Q₁₁; b) V₁₂ > V₁₁; and c) I₁₂ > I₁₁.

In addition, at the second ambient temperature T₂, where T₂ is greater than T₁, in a single charge-and-discharge process of the first cycle interval, the electrochemical device possesses a charge capacity Q₂₁ and satisfies a condition that Q₂₁ differs from Q₁₁ by at most 20%, and the electrochemical device possesses a discharge cut-off voltage V₂₁ or a discharge cut-off current I₂₁ in the first cycle interval. In a single charge-and-discharge process of the second cycle interval, the electrochemical device possesses a charge capacity Q₂₂ and a discharge cut-off voltage V₂₂ or a discharge cut-off current I₂₂, and the electrochemical device satisfies at least one of conditions d) to f): d) Q₂₂ ≤ Q₂₁; e) V₂₂ > V₂₁; and f) I₂₂ > I₂₁.

In other words, regardless of the ambient temperature, different discharge cut-off voltages or different discharge cut-off currents are used in different cycle intervals. As the number of cycles of the electrochemical device increases, the discharge cut-off voltage of the electrochemical device is increased gradually.

Due to the use of different discharge cut-off voltages or discharge cut-off currents, the cycle characteristics of the electrochemical device are different. As shown in FIG. 2, curves 310, 320, 330, and 340 represent a cycle curve of a silicon-based electrochemical device discharged until a discharge cut-off voltage of 3 V, 3.2 V, 3.3 V, and 3.4 V, respectively. For the silicon-based electrochemical device, the slopes of the cycle curves of the electrochemical device discharged until a discharge cut-off voltage of 3 V, 3.2 V, 3.3 V, and 3.4 V respectively differ from each other. A high cut-off voltage leads to high cycle stability but a low initial capacity. A low cut-off voltage leads to low cycle stability but a high initial capacity. The cycle curves corresponding to different cut-off voltages intersect at a point when the number of cycles reaches a given value. Understandably, although the description here uses a silicon-based electrochemical device as an example, the electrochemical devices with other second active materials possess similar characteristics, details of which are omitted here.

Based on the above characteristics, different discharge cut-off voltages are used in different cycle intervals in this embodiment of this application. As the number of cycles of the electrochemical device increases, the discharge cut-off voltage of the electrochemical device is increased gradually to implement optimal use of the electrochemical device in a full lifespan, and in turn, improve the cycle performance of the electrochemical device in the full lifespan.

Specifically, in an embodiment of this application, the processor that may be connected to the electrochemical device is further configured to: obtain a current number of charge-and-discharge cycles of the electrochemical device; determine a target cycle interval of the electrochemical device based on the current number of charge-and-discharge cycles; determine a target discharge cut-off voltage or a target discharge cut-off current based on the target cycle interval and a preset second mapping relationship between a cycle interval and a discharge cut-off voltage or discharge cut-off current, where the second mapping relationship includes M sequential cycle intervals and corresponding M discharge cut-off voltages or discharge cut-off currents, a cycle interval with a larger number of charge-and-discharge cycles corresponds to a higher discharge cut-off voltage or discharge cut-off current, and M is an integer greater than or equal to 2; and control discharging of the electrochemical device until the target discharge cut-off voltage or target discharge cut-off current.

In an embodiment of this application, a difference between discharge cut-off voltages corresponding to two adjacent cycle intervals is greater than a first voltage range, and the first voltage range is between 0.1 V and 0.2 V.

Using a silicon-based electrochemical device shown in FIG. 2 as an example, the electrochemical device is cycled at a voltage of 3.0 V when the cycle interval falls within the 1^{st} cycle to the 200^{th} cycle, cycled at a voltage of 3.2 V when the cycle interval falls within the 201^{st} cycle to the 1000^{th} cycle, and cycled at a voltage of 3.4 V when the cycle interval exceeds the 1000^{th} cycle. In this way, the discharge cut-off voltage of the silicon-based electrochemical device is increased in steps, and the utilization of silicon is reduced gradually, and the optimal use of the silicon-based electrochemical device is implemented, thereby improving the cycle performance of the silicon-based electrochemical device in the full lifespan.

An embodiment of this application further provides a charging method of an electrochemical device. The charging method is applicable to the electrochemical device disclosed in the foregoing device embodiment of this application. A negative active material of the electrochemical device includes a first active material and a second active material. A theoretical gram capacity of the first active material is less than a theoretical gram capacity of the second active material. An upper limit of a discharge operating voltage of the first active material is higher than an upper limit of a discharge operating voltage of the second active material. The method includes:
controlling, at a first ambient temperature T₁, in a single charge-and-discharge process of a first cycle interval, the electrochemical device to possess a charge capacity Q₁₁ and a discharge cut-off voltage V₁₁ or a discharge cut-off current I₁₁;
controlling, in a single charge-and-discharge process of a second cycle interval, the electrochemical device to possess a charge capacity Q₁₂ and a discharge cut-off voltage V₁₂ or a discharge cut-off current I₁₂ and to satisfy at least one of conditions a) to c):
   a) Q₁₂ ≤ Q₁₁;
   b) V₁₂ > V₁₁; and
   c) I₁₂ > I₁₁;
controlling, at a second ambient temperature T₂, where T₂ is greater than T₁, in the single charge-and-discharge process of the first cycle interval, the electrochemical device to possess a charge capacity Q₂₁ and to satisfy a condition that Q₂₁ differs from Q₁₁ by at most 20%, where the electrochemical device possesses a discharge cut-off voltage V₂₁ or a discharge cut-off current I₂₁ in the first cycle interval; and
controlling, in the single charge-and-discharge process of the second cycle interval, the electrochemical device to possess a charge capacity Q₂₂ and a discharge cut-off voltage V₂₂ or a discharge cut-off current I₂₂, and to satisfy at least one of conditions d) to f):
   d) Q₂₂ ≤ Q₂₁;
   e) V₂₂ > V₂₁; and
   f) I₂₂ > I₂₁.

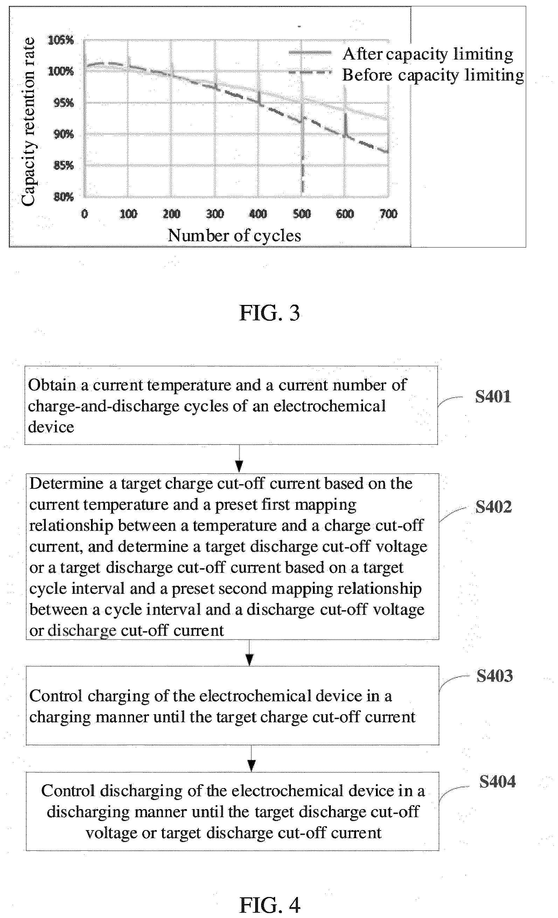

As shown in FIG. 4, in an embodiment of this application, the charging method includes the following steps:
Step S401: Obtaining a current temperature and a current number of charge-and-discharge cycles of an electrochemical device.
Step S402: Determining a target charge cut-off current based on the current temperature and a preset first mapping relationship between a temperature and a charge cut-off current, and determining a target discharge cut-off voltage or a target discharge cut-off current based on a target cycle interval and a preset second mapping relationship between a cycle interval and a discharge cut-off voltage or discharge cut-off current. The first mapping relationship includes M temperatures and corresponding N charge cut-off currents. The N charge cut-off currents increase with the rise of the N temperatures. The second mapping relationship includes M sequential cycle intervals and corresponding M discharge cut-off voltages or discharge cut-off currents. A cycle interval with a larger number of charge-and-discharge cycles corresponds to a higher discharge cut-off voltage or discharge cut-off current. N and M are integers, N is greater than or equal to 2, and M is greater than or equal to 2.
Step S403: Controlling charging of the electrochemical device in a charging manner until the target charge cut-off current.
Step S404: Controlling discharging of the electrochemical device in a discharging manner until the target discharge cut-off voltage or target discharge cut-off current.

In an embodiment of this application, the charging manner includes: charging the electrochemical device at a constant charge current until a first voltage, and then charging the electrochemical device at a constant voltage of the first voltage until a first current; charging the electrochemical device at a constant current of the first current until a second voltage, and then charging the electrochemical device at a constant voltage of the second voltage until a second current; and charging the electrochemical device at a constant current of the second current until a third voltage, and then charging the electrochemical device at a constant voltage of the third voltage until a target charge cut-off current.

The charging method provided in this embodiment is applicable to the corresponding electrochemical device in the foregoing embodiment, and achieves beneficial effects of corresponding electrochemical device, details of which are omitted here. In addition, for the meanings and settings of parameters in this embodiment, reference may be made to the description of the corresponding part in the foregoing device embodiment, details of which are omitted here.

To make the objectives, technical solutions, and technical effects of this application clearer, the following describes this application in more detail with reference to specific examples. The electrochemical devices in all comparative embodiments and all embodiments of this application are 4.48 V electrochemical devices containing 3 wt% silicon and applicable in a 3C system. It is hereby noted that the electrochemical devices falling within other chemical systems may be used instead in each comparative embodiment and each embodiment of this application, without being limited in this application.

The charging process used in each comparative embodiment and each embodiment of this application is: charging the electrochemical device at a constant current of 3 C until the voltage reaches 4.25 V, and then charging the electrochemical device at a constant voltage of 4.25 V until the current reaches 1.8 C; charging the electrochemical device at a constant current of 1.8 C until the voltage reaches 4.35 V, and then charging the electrochemical device at a constant voltage of 4.35 V until the current reaches 1.5 C; charging the electrochemical device at a constant current of 1.5 C until the voltage reaches 4.53 V, and then charging the electrochemical device at a constant voltage of 4.53 V until the current reaches a cut-off current A. In all comparative embodiments and all embodiments of this application, the electrochemical device is discharged at a constant current of 0.5 C, where C is a charge rate, which is another measure of charging speed, and means a current value at which the electrochemical device can be charged to reach a rated capacity within a specified time. The charge rate is expressed by the following formula: charge rate = charge current/rated capacity. Understandably, the charging process described above is merely an example, and any other appropriate charging method may be applied in an embodiment of this application.

The following describes cycle tests performed on the electrochemical devices prepared by the charging method of Comparative Embodiments 1 to 3 and on the electrochemical devices prepared by the charging method of some embodiments of this application, so as to compare the cycle performance.

### Comparative Embodiment 1

The test temperature is 45 °C.

The cut-off current A is 0.12 C.

The discharge cut-off voltage in a full lifespan is 3.0 V.

### Comparative Embodiment 2

The cut-off current A is 0.25 C.

The discharge cut-off voltage in a full lifespan is 3.0 V.

### Comparative Embodiment 3

The cut-off current A is 0.12 C.

The discharge cut-off voltage is increased in steps during the full lifespan. That is, in the cycle interval of the 1^{st} cycle to 500^{th} cycle, the discharge cut-off voltage is 3.0 V; in the cycle interval of the 500^{th} cycle to 1000^{th} cycle, the discharge cut-off voltage is 3.2 V; and, when the cycle interval exceeds the 1000^{th} cycle, the discharge cut-off voltage is 3.4 V.

### Embodiment

The cut-off current A is 0.25 C.

The discharge cut-off voltage is increased in steps during the full lifespan. That is, in the cycle interval of the 1^{st} cycle to 500^{th} cycle, the discharge cut-off voltage is 3.0 V; in the cycle interval of the 500^{th} cycle to 1000^{th} cycle, the discharge cut-off voltage is 3.2 V; and, when the cycle interval exceeds the 1000^{th} cycle, the discharge cut-off voltage is 3.4 V

Table 2 shows the test results of cycle performance of the electrochemical devices of each comparative embodiment and an embodiment of this application. The performance indicators include: capacity retention rate after 1200 cycles completed at 25 °C, expansion rate after 1200 cycles completed at 25 °C, capacity retention rate after 600 cycles completed at 45 °C, and expansion rate after 600 cycles completed at 45 °C.

**Table 2**

| 10 wt% Si | Cycle life (cycled at 25 °C) | Cycle expansion rate (cycled at 25 °C) | Cycle life (cycled at 45 °C) | Cycle expansion rate (cycled at 45 °C) |
|---|---|---|---|---|
| Comparative Embodiment 1 | 71.9% | 13.4 | 76.5% | 11.8% |
| Comparative Embodiment 2 | 70.6% | 12.6% | 82.4% | 11.2% |
| Comparative Embodiment 3 | 82.1% | 10.4% | 81.9% | 11.2% |
| Embodiment | 83.3% | 9.8% | 88.6% | 8.9% |

As can be seen from Table 2, the technical solutions in the illustrative embodiments of this application can not only solve the problem of poor cycle tendency of the electrochemical device cycled at a high temperature of 45 °C, but also further improve the cycle performance and suppress the expansion rate of the electrochemical device cycled at a normal temperature of 25 °C by increasing the discharge cut-off voltage in steps, thereby improving the cycle performance of the electrochemical device in the full lifespan.

FIG. 5 is a schematic structural diagram of an electronic device according to an embodiment of this application. As shown in FIG. 5, the electronic device 50 includes, but without being limited to, at least one processor 510 and an electrochemical device 520. Such components may be interconnected directly or by a bus.

The electrochemical device 520 is the electrochemical device described in the foregoing device embodiment. The processor 510 may charge the electrochemical device 520 according to the charging method of the electrochemical device described in the foregoing method embodiment. The technical principles and technical effects are available in the preceding embodiments, and are omitted here.

It is hereby noted that FIG. 5 shows merely an example of the electronic device. In other embodiments, the electronic device may include more or fewer components, or may include components configured differently. The electronic device may be any appropriate rechargeable device or component such as a watch, a mobile phone, a tablet computer, a personal digital assistant, a wireless fidelity (Wireless Fidelity, WiFi) unit, a Bluetooth unit, or a loudspeaker.

A person skilled in the art can easily conceive other technical solutions of this application after reading this specification and practicing the inventive concept hereof. This application is intended to cover any variations, uses, or adaptations of this application. Such variations, uses or adaptations follow the general principles of this application and include common knowledge or conventional technical means in this technical field that are not claimed by this application. The specification and embodiments are merely illustrative, and the real scope and spirit of this application are subject to the following claims.

Understandably, this application is not limited to the precise structures described above and shown in the drawings, to which various modifications and changes may be made without departing from the scope hereof. The protection scope of this application is subject to the claims appended hereto.

What is described above is merely exemplary embodiments of this application, but is not intended to limit this application. Any modifications, equivalent replacements, improvements, and the like made without departing from the spirit and principles of this application still fall within the protection scope of this application. Understandably, the embodiments in this specification are all described in a progressive manner. For the same or similar part in one embodiment, reference may be made to another embodiment. Each embodiment focuses on differences from other embodiments. Especially, for a method embodiment, because the method in the method embodiment is basically similar to the method described in the device embodiment and the system embodiment, the method is described briefly. For the relevant part, reference may be made to the corresponding description in other embodiments. Understandably, although specific embodiments of this specification have been described above, other embodiments still fall within the scope of the claims. In some circumstances, the actions or steps set out in the claims may be performed in an order different from that described in the embodiments to still achieve expected results. In addition, the processes depicted in the drawings can still achieve expected results even without being performed in the shown order or sequential order. In some embodiments, multitasking and parallel processing are appropriate or advantageous. Understandably, an element in a singular form herein or a single element displayed in the drawings does not limit the number of the element to one. Further, separate modules or components described or illustrated herein may be combined into a single module or component, and a single module or component described or illustrated herein may be split into a plurality of modules or components.

Understandably, the terms and expressions used herein are merely for ease of description, and one or more embodiments of this specification are not limited to such terms and expressions. The use of such terms and expressions is not intended to exclude any shown or described equivalent features (or a part thereof). It is hereby noted that various possible modifications are also included in the scope of the claims. Other modifications, changes, and substitutions may still exist. Accordingly, the claims are intended to cover all such equivalents.

## Claims

1. An electrochemical device, comprising a negative active material; **characterized in that**, the negative active material comprises a first active material and a second active material; a gram capacity of the first active material is less than a gram capacity of the second active material, and an upper limit of a discharge operating voltage of the first active material is higher than an upper limit of a discharge operating voltage of the second active material;
at a first ambient temperature T₁,
in a single charge-and-discharge process of a first cycle interval, the electrochemical device has a charge capacity Q₁₁, a discharge cut-off voltage V₁₁, and a discharge cut-off current I₁₁;
in a single charge-and-discharge process of a second cycle interval, the electrochemical device has a charge capacity Q₁₂, a discharge cut-off voltage V₁₂, and a discharge cut-off current I₁₂, and satisfies at least one of conditions a) to c):
a) Q₁₂ ≤ Q₁₁;
b) V₁₂ > V₁₁; and
c) I₁₂ > I₁₁;
at a second ambient temperature T₂, wherein T₂ is greater than T₁,
in the single charge-and-discharge process of the first cycle interval, the electrochemical device has a charge capacity Q₂₁, and Q₂₁ differs from Q₁₁ by at most 20%;
in the first cycle interval, the electrochemical device has a discharge cut-off voltage V₂₁ and a discharge cut-off current I₂₁; and
in the single charge-and-discharge process of the second cycle interval, the electrochemical device has a charge capacity Q₂₂, a discharge cut-off voltage V₂₂, and a discharge cut-off current I₂₂, and satisfies at least one of conditions d) to f):
d) Q₂₂ ≤ Q₂₁,
e) V₂₂ > V₂₁; and
f) I₂₂ > I₂₁.

2. The electrochemical device according to claim 1, **characterized in that**, a temperature coefficient of the second active material is lower than 0.98.

3. The electrochemical device according to claim 1, **characterized in that**, the single charge-and-discharge process of the electrochemical device comprises:
charging the electrochemical device at a constant current until a first voltage, and then charging the electrochemical device at a constant voltage of the first voltage until a first current;
charging the electrochemical device at a constant current of the first current until a second voltage, and then charging the electrochemical device at a constant voltage of the second voltage until a second current; and
charging the electrochemical device at a constant current of the second current until a third voltage, and then charging the electrochemical device at a constant voltage of the third voltage until a target charge cut-off current.

4. The electrochemical device according to claim 1, **characterized in that**, T₁ < 35 °C, and 35 °C ≤ T₂ ≤ 60 °C.

5. The electrochemical device according to claim 1, **characterized in that**, Q₂₂ differs from Q₁₂ by at most 20%.

6. The electrochemical device according to claim 1, **characterized in that**, the electrochemical device is connected to a processor, and the processor is configured to:
obtain a current temperature of the electrochemical device;
determine a target charge cut-off current of the electrochemical device based on the current temperature and a preset first mapping relationship between a temperature and a charge cut-off current, wherein the first mapping relationship comprises N temperatures and corresponding N charge cut-off currents, a higher temperature corresponds to a higher charge cut-off current, and N is an integer greater than or equal to 2; and
control charging of the electrochemical device until the target charge cut-off current.

7. The electrochemical device according to claim 6, **characterized in that**, the processor is configured to:
determine that a temperature closest to the current temperature in the first mapping relationship is a target temperature, and determine that a charge cut-off current corresponding to the target temperature is the target charge cut-off current.

8. The electrochemical device according to claim 6, **characterized in that**, the processor is further configured to:
obtain a current number of charge-and-discharge cycles of the electrochemical device;
determine a target cycle interval of the electrochemical device based on the current number of charge-and-discharge cycles;
determine a target discharge cut-off voltage or a target discharge cut-off current based on the target cycle interval and a preset second mapping relationship between a cycle interval and a discharge cut-off voltage or discharge cut-off current, wherein the second mapping relationship comprises M sequential cycle intervals and corresponding M discharge cut-off voltages or discharge cut-off currents, a cycle interval with a larger number of charge-and-discharge cycles corresponds to a higher discharge cut-off voltage or discharge cut-off current, and M is an integer greater than or equal to 2; and
control discharging of the electrochemical device until the target discharge cut-off voltage or target discharge cut-off current.

9. An electronic device, **characterized in that**, the electronic device comprises the electrochemical device according to any one of claims 1 to 8.

10. A method for charging and discharging the electrochemical device of claim 1, **characterized in that**, the method comprises:
at a first ambient temperature T₁,
controlling, in the single charge-and-discharge process of the first cycle interval, the electrochemical device to have the charge capacity Q₁₁ and the discharge cut-off voltage V₁₁ or the discharge cut-off current I₁₁;
controlling, in the single charge-and-discharge process of the second cycle interval, the electrochemical device to have the charge capacity Q₁₂ and the discharge cut-off voltage V₁₂ or the discharge cut-off current I₁₂ and to satisfy at least one of conditions a) to c):
a) Q₁₂ ≤ Q₁₁;
b) V₁₂ > V₁₁; and
c) I₁₂ > I₁₁;
at the second ambient temperature T₂, wherein T₂ is greater than T₁,
controlling, in the single charge-and-discharge process of the first cycle interval, the electrochemical device to have the charge capacity Q₂₁ and to satisfy the condition that Q₂₁ differs from Q₁₁ by at most 20%;
controlling, in the first cycle interval, the electrochemical device to have the discharge cut-off voltage V₂₁ or the discharge cut-off current I₂₁; and
controlling, in the single charge-and-discharge process of the second cycle interval, the electrochemical device to have the charge capacity Q₂₂ and the discharge cut-off voltage V₂₂ or the discharge cut-off current I₂₂, and to satisfy at least one of conditions d) to f):
d) Q₂₂ ≤ Q₂₁;
e) V₂₂ > V₂₁; and
f) I₂₂ > I₂₁.
